Europäisches Patentamt

European Patent Office

Office européen des brevets

(19)

(11) **EP 0 408 445 B1**

(12) **FASCICULE DE BREVET EUROPEEN**

(45) Date de publication et mention
de la délivrance du brevet:
**28.02.1996 Bulletin 1996/09**

(51) Int Cl.6: **G02B 3/02**

(21) Numéro de dépôt: **90401990.8**

(22) Date de dépôt: **10.07.1990**

(54) **Dispositif optique pour l'agrandissement d'images**

Optische Vorrichtung zur Bildvergrösserung

Optical device for image magnification

(84) Etats contractants désignés:
**BE CH DE ES FR GB IT LI NL SE**

(30) Priorité: **12.07.1989 FR 8909371**

(43) Date de publication de la demande:
**16.01.1991 Bulletin 1991/03**

(73) Titulaire: **Cintra, Daniel**
**F-92700 Colombes (FR)**

(72) Inventeur: **Cintra, Daniel**
**F-92700 Colombes (FR)**

(74) Mandataire: **Lejet, Christian**
**F-92600 Asnières (FR)**

(56) Documents cités:
DE-A- 2 210 727  FR-A- 2 472 197
GB-A- 902 535  US-A- 2 683 394
US-A- 3 447 860  US-A- 3 936 151
US-A- 3 980 399  US-A- 4 423 438

## Description

La présente invention concerne l'agrandissement des images, telles que celles produites par des appareils de télévision. On utilise a cet effet un système optique tel qu'un ensemble comprenant au moins une lentille épaisse ou son équivalent, qui permet d'obtenir, à partir d'un objet réel, une image agrandie, avec la possibilité, pour un observateur, de se déplacer dans une zone assez vaste tout en observant une image correcte, c'est-à-dire sans déformation gênante.

Dans la présente description, on appellera "générateur d'image" tout système produisant une image, tel que tube cathodique, écran à cristaux liquides, écran à plasma, par thermoluminescence, générateur d'hologramme ou tout autre moyen produisant des images à 2 ou 3 dimensions.

On appellera "image source" l'image produite par le générateur d'image ; par exemple, si le générateur d'image est un tube cathodique, l'image source est portée par l'écran dudit tube.

On appellera "axe" de l'image source la droite perpendiculaire à l'image source en son centre.

Dans le cas où l'image source admet deux plans de symétrie distincts, on appellera "axe" de l'image source la droite intersection de ces deux plans, et on appellera "centre" de l'image source l'intersection de ladite image avec l'axe de ladite image.

On appellera "observateur" toute personne observant l'image source agrandie par un système agrandisseur d'image.

On appellera "lentille épaisse" une pièce de matière transparente, ayant globalement la forme d'un disque ou d'un rectangle, et limitée sur chacune de ses deux faces par une surface. Ladite lentille épaisse ne possède pas obligatoirement une symétrie de révolution, et ne possède pas obligatoirement de plan de symétrie.

Dans une coupe d'une lentille épaisse par un plan, on dira que, dans ledit plan, une courbe intersection dudit plan et d'une des faces de ladite lentille est "convexe" en un point V si, pour tout point W au voisinage du point V, le segment VW est entièrement compris dans la matière transparente constituant ladite lentille. On dira que ladite courbe est "strictement convexe" en V si V et W sont les seuls points communs entre ledit segment VW et la surface de ladite lentille.

De même, on dira qu'une telle courbe est "concave" en V si ledit segment VW est entièrement compris (hormis ses extrémités) à l'extérieur de ladite matière transparente.

On appellera "lentille de Fresnel" une forme de réalisation d'une lentille épaisse, ladite forme de réalisation utilisant la technique des échelons sur au moins une partie de ladite lentille de Fresnel.

On appellera "axe" d'une lentille la droite perpendiculaire à ladite lentille en son centre.

Dans le cas où une lentille admet deux plans de symétrie distincts, on appellera "axe" de ladite lentille la droite intersection de ces deux plans, et on appellera "centre" de ladite lentille l'intersection de ladite lentille avec l'axe de ladite lentille.

On appellera "partie optiquement utile" une partie d'une lentille épaisse ou de Fresnel par où entrent ou sortent des rayons lumineux participant à la réalisation de l'effet d'agrandissement de l'image source.

On appellera "surface de Fresnel" une des deux surfaces à échelons d'une lentille de Fresnel.

On appellera "flanc utile", sur une surface de Fresnel, un flanc par où entrent ou sortent des rayons lumineux participant à la réalisation de l'effet d'agrandissement de l'image source.

On appellera "flanc de liaison", sur une surface de Fresnel, un flanc par où entrent ou sortent des rayons lumineux ne participant pas à la réalisation de l'effet d'agrandissement de l'image source. Deux flancs utiles successifs sont reliés entre eux par zéro (cas où deux flancs utiles successifs ont un point commun), un ou plusieurs flancs de liaison.

On appellera "lentille cylindrique" une lentille épaisse ou de Fresnel générée par une surface plane fermée se déplaçant selon un segment de droite.

On appellera "diagonale" d'une image la distance entre les deux points de ladite image les plus éloignés l'un de l'autre. Dans le cas où l'image est rectangulaire, sa "diagonale" est la diagonale du rectangle.

On appellera "agrandissement effectif" le rapport entre la tangente de l'angle sous lequel un segment de droite d'une image virtuelle, produite par un système optique, est vu par un observateur, et la tangente de l'angle sous lequel le segment de droite de l'image source correspondante serait vu par le même observateur si ledit système optique était absent.

On appellera "zone d'observation" la zone où peut se trouver l'observateur pour observer une image correcte. Dans le cas où le système optique possède une symétrie de révolution, la zone d'observation est un cône ayant pour axe l'axe de la lentille, et pour sommet le centre de la face de la lentille côté observateur. On caractérisera la zone d'observation par l'"ouverture" du système, qui est le demi-angle au sommet dudit cône.

Il existe des systèmes optiques constituant un arrière-plan technologique. Leurs domaines techniques et les problèmes optiques à résoudre ne sont pas ceux de la présente invention. US-A-3 936 151 décrit un système optique comportant une lentille ayant une face convexe au centre et concave à la périphérie; réalisée selon une technique à échelons non circulaires, et une face plane. La source lumineuse est ponctuelle. GB-A-902 535 décrit une lentille produisant un faisceau de rayons parallèles a partir exclusivement d'une source lumineuse ponctuelle (foyer de la lentille). US-A-4 423 438 décrit un système de projection pour images de télévision, produisant une image réelle. On utilise une lentille de Schmidt pour corriger une aberration sphérique. Cette lentille possède une face plane. US-A-3 980 399 décrit un procédé de fabrication d'une lentille ayant un profil convexe au centre et concave à la périphérie sur les deux faces de la lentille.

Des systèmes connus pour l'agrandissement d'images sont décrits dans FR-A-1 346 696, FR-A-1 379 018, FR-A-2 472 197 et dans US-A-3 418 426. Dans ces systèmes connus, on utilise une lentille de Fresnel pour produire une image virtuelle agrandie d'une image source qui peut être constituée par un écran de télévision. FR-A-2 472 197 décrit une lentille de Fresnel simulant une lentille épaisse de révolution, dont la face côté image source est concave dans la région centrale de ladite lentille épaisse, et convexe dans la région périphérique, et dont la face côté observateur est partout convexe.

Les inconvénients des systèmes cités ci-dessus sont les suivants :

- la zone d'observation est très réduite (sauf pour FR-A-2 472 197)
- l'encombrement du système est important, notamment pour FR-A-2 472 197, où d'une part la lentille est à une distance de l'image source égale à la diagonale de ladite image source, et où, d'autre part, ladite lentille est elle-même de dimensions importantes.

En revanche, le système selon la présente invention présente les avantages suivants :

- le système permet d'agrandir l'image source d'un agrandissement effectif de l'ordre de 2, sans déformation notable de l'image ;
- la zone d'observation est au moins aussi large que celle du système de FR-A-2 472 197 ;
- l'encombrement est nettement moins important que celui du système selon FR-A-2 472 197.

Par ailleurs, le document US-A-2 683 394 décrit un système optique comprenant les éléments structurels du préambule de la première revendication, mais dont le fonctionnement et le but sont extrêmement différents de ceux du système selon l'invention. En effet, le système optique selon ce document comprend à la fois des lentilles agissant par réfringence et des miroirs. Ces derniers, plaqués sur la matière transparente, agissent selon les lois de la réflexion et non selon celles de la réfraction. Par ailleurs, ce système optique trouve son application en tant que système de projection produisant une image virtuelle, l'image source étant située entre l'image virtuelle et le système optique.

La présente invention, qui concerne l'agrandissement d'images telles que celles produites par les appareils de télévision, est clairement définie par la partie caractérisante de la revendication principale. D'autres aspects de l'invention font l'objet des sous-revendications.

L'invention sera mieux comprise, et d'autres buts, avantages et caractéristiques de celle-ci apparaîtront plus clairement à la lecture de la description qui suit, donnée à titre non limitatif, de deux modes préférés de réalisation, et à laquelle sont jointes trois planches de dessins, sur lesquelles:

La figure 1 est une vue en coupe du système selon la présente invention, dans lequel la partie optique est une lentille épaisse, qui peut être réalisée dans une substance telle que du polyméthacrylate de méthyle.

La figure 2 est une vue en perspective du système selon la présente invention, dans lequel la partie optique est une paire de lentilles épaisses cylindriques.

La figure 3 est une vue en perspective du système selon la présente invention, dans lequel la partie optique est une lentille de Fresnel, qui peut être réalisée dans une substance telle que du polyméthacrylate de méthyle.

La figure 4 est une vue en coupe partielle de la lentille de la figure 3, ladite vue précisant des paramètres pour la définition quantitative d'une réalisation préférée de la présente invention.

Les figures 5, 6 et 8 sont des vues en coupe partielle de lentilles de Fresnel selon la présente invention, illustrant des moyens permettant de diminuer les rayons parasites transmis par lesdites lentilles.

La figure 7 est une vue en coupe partielle d'une lentille de Fresnel selon la présente invention, illustrant des moyens permettant de modifier les caractéristiques de déviation des rayons lumineux par ladite lentille.

La figure 9 est une vue en perspective d'une lentille (épaisse ou de Fresnel) selon la présente invention, munie d'un dispositif permettant de déformer ladite lentille.

La figure 10 est une vue en coupe permettant de préciser l'importance de la région convexe d'une des faces du système optique selon la présente invention.

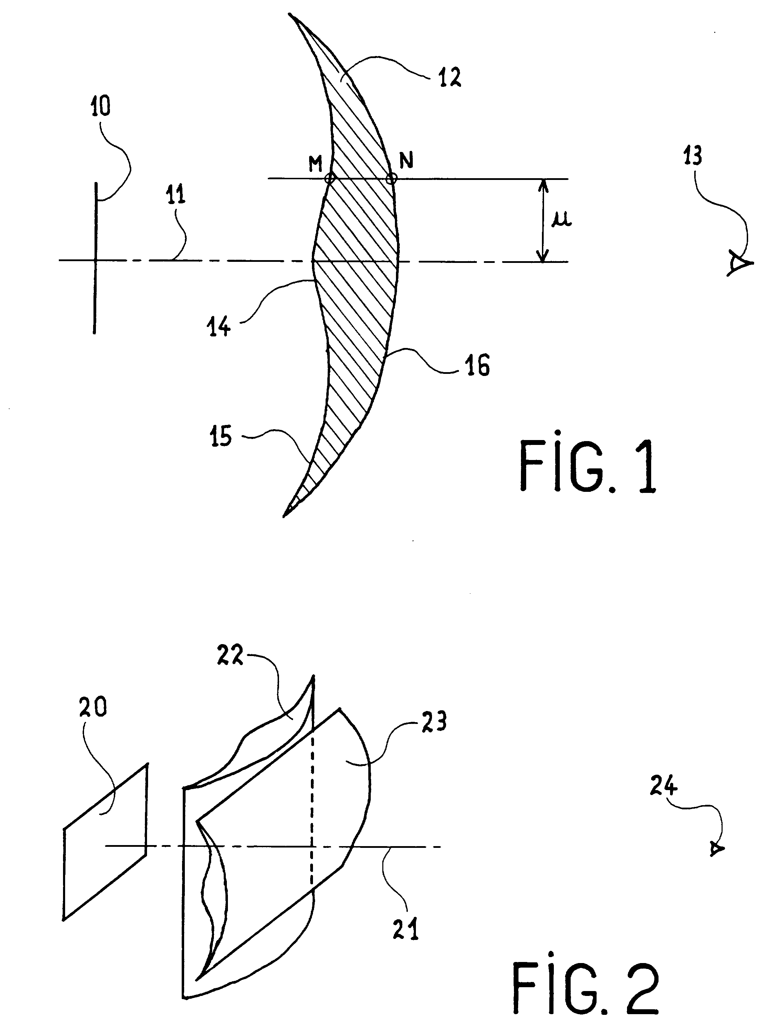

En figure 1, on voit un mode de réalisation de la présente invention, en coupe, vue de dessus: On distingue l'image source 10, une lentille épaisse 12 et l'observateur 13. Dans ledit mode de réalisation, on suppose que l'image source 10 possède un axe 11. Le plan de coupe est parallèle à l'axe 11. Dans le cas présent, il contient l'axe 11. Du côté de l'image source, la courbe intersection de la lentille épaisse et du plan de coupe est convexe dans la partie centrale 14, et concave dans la partie périphérique 15. Du côté de l'observateur, la courbe 16, intersection de ladite lentille et du plan de coupe, est partout convexe, et strictement convexe sur au moins une partie de ladite courbe. La lentille 12 n'a pas nécessairement de symétrie de révolution. On distingue également un point M situé sur la courbe 14, 15, côté image source, et un point N situé sur la courbe 16. Les points M et N sont situés dans le plan de coupe, et sont situés à une même distance u dudit axe. Dans une variante de la présente invention, la distance de M à N est une fonction décroissante de la distance u. Un cas particulier de ladite variante est celui où la lentille 12 possède une symétrie de révolution par rapport à l'axe 11.

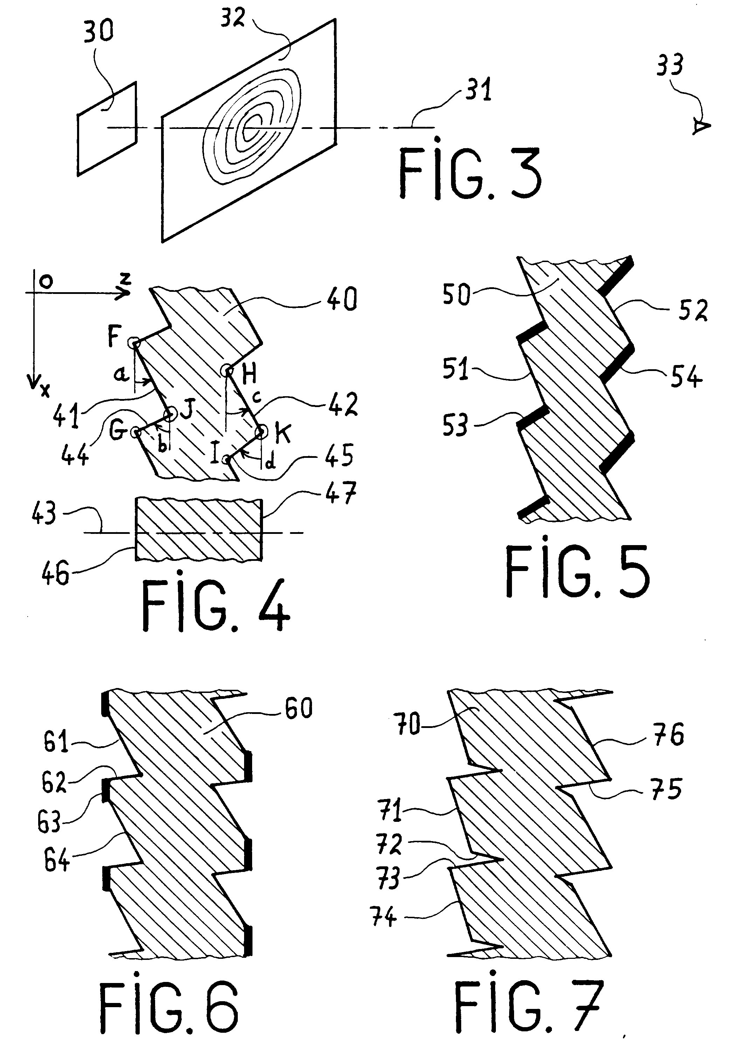

En figure 2, on voit un autre mode de réalisation de la présente invention, représenté en perspective. On distingue une image source 20 et son axe 21, une première lentille épaisse cylindrique 22, de génératrice verticale, une deuxième lentille épaisse cylindrique 23, de génératrice horizontale, et un observateur 24. Les surfaces de base des cylindres possèdent les mêmes propriétés que la vue en coupe de la lentille 12 dans la figure 1. Une variante de cette réalisation à base de lentilles cylindriques est constituée de lentilles de nature cylindrique, mais dans lesquelles la forme de la surface de base varie légèrement en fonction du déplacement le long de la génératrice.

En figure 3, on distingue une image source 30 et son axe 31, une lentille de Fresnel 32 selon la présente invention, et l'observateur 33. Ici, la lentille 32 admet un axe qui est également l'axe 31 de l'image source. Dans une variante, la lentille 32 pourrait n'admettre qu'un plan de symétrie vertical contenant l'axe 31 de l'image source. Dans une autre variante, la lentille 32 pourrait avoir un axe distinct de l'axe de l'image source, mais de préférence parallèle à ce dernier.

La figure 4 est une vue en coupe partielle de la lentille 32 de la figure 3, coupe selon un plan vertical contenant l'axe 31. On distingue : la lentille de Fresnel 40 et son axe 43 ; un flanc actif 41 et un flanc de liaison 44, situés côté source ; un flanc actif 42 et un flanc de liaison 45, situés côté observateur ; les extrémités F et J du flanc 41, F étant plus éloigné de l'axe 43 que J ; les extrémités H et K du flanc 42, H étant plus éloigné de l'axe 43 que K ; l'extrémité G du flanc 44, G étant plus proche de l'axe 43 que J ; l'extrémité I du flanc 45, I étant plus proche de l'axe 43 que J ; un repère Oxz, O étant au-dessus de l'axe 43, Oz étant parallèle à l'axe 43 et pointant vers l'observateur, Ox étant perpendiculaire à l'axe 43 et pointant vers l'axe 43. Dans ces conditions, on définira le flanc FJ par l'angle orienté a=$(\overrightarrow{Ox},\overrightarrow{FJ})$, et le flanc HK par l'angle orienté c=$(\overrightarrow{Ox},\overrightarrow{HK})$. De la même façon, on appellera b et d les angles définissant des flancs de liaison tels que 44 et 45. On aura : b=$(\overrightarrow{Ox},\overrightarrow{JG})$ et d=$(\overrightarrow{Ox},\overrightarrow{KI})$.

Pour un flanc donné, on appellera un angle orienté tel que $(\overrightarrow{Ox},\overrightarrow{FJ})$ l'"angle d'inclinaison" du flanc. Dans la figure 4, on voit par exemple que les angles a et c définissant les flancs FJ et HK sont positifs et inférieurs à $\pi/2$ radian, alors que les angles b et d sont négatifs et supérieurs à $-\pi/2$ radian. Pour définir un flanc tel que FJ, on introduit également la distance entre le milieu de ce flanc (milieu pris dans le plan de coupe, c'est-à-dire dans le plan de la figure 4) et l'axe 43 ; on appellera cette distance la "distance du flanc à l'axe".

Si, en un point tel que F ou J, l'angle formé par les deux flancs contigus, mesuré à l'intérieur de la matière de la lentille, est inférieur à $\pi$ radians en valeur absolue, on dira que ledit point est une "crête" ; dans le cas où ledit angle a une valeur absolue supérieure à $\pi$ radians, on dira que ledit point est un "val". En figure 4, on voit que F est une crête, alors que J est un val.

On appellera "sillon" l'ensemble constitué par deux flancs contigus tels que FJ et JG, se joignant en un val. On appellera "largeur" d'un sillon la distance entre deux crêtes successives telles que F et G. Les sillons ont généralement une largeur constante sur une face d'une lentille de Fresnel. Mais on pourra aussi prévoir des sillons de largeur variable.

On appellera "rayon d'inflexion", dans un plan de coupe tel que celui de la figure 4, la distance entre l'axe et le premier flanc utile (en partant de l'axe 43) pour lequel la fonction donnant l'angle d'inclinaison en fonction de la distance du flanc à l'axe change de sens de variation, ledit premier flanc n'étant pas celui situé sur l'axe 43.

On appellera "rayon de platitude", dans un plan de coupe tel que celui de la figure 4, la distance entre l'axe et le premier flanc utile (en partant de l'axe 43) ayant un angle d'inclinaison nul, ledit flanc n'étant pas celui situé sur l'axe 43. En général, le rayon de platitude n'est pas égal au rayon d'inflexion.

La lentille de Fresnel 32 est une réalisation selon une technique à échelons de la lentille épaisse 12. Les deux faces sont entièrement réalisées en technique à échelons. Cependant, on pourrait ne réaliser, selon ladite technique à échelons, qu'une des deux faces, qu'une partie de chacune des deux faces, ou qu'une partie d'une seule face. Pour la lentille 32, les fonctions représentant les angles d'inclinaison des flancs utiles 41 et 42 en fonction de la distance desdits flancs à l'axe 43 de la lentille 32 ont les caractéristiques suivantes :

- pour les flancs utiles de la face côté image source, la fonction est décroissante jusqu'à une distance de l'ordre du rayon d'inflexion, puis croissante ;

- pour les flancs utiles de la face côté observateur, la fonction est croissante.

Dans le cas où une partie seulement d'une face est réalisée en technique à échelons, les caractéristiques de décroissance et de croissance indiquées ci-dessus ne concernent que ladite partie. Dans le cas où une face ne comporte aucune partie réalisée en technique à échelons, lesdites caractéristiques ne concernent pas ladite face. Ainsi, on aura, de manière générale :

- pour la partie réalisée en technique de Fresnel sur la face côté image source, la fonction représentant les flancs utiles est d'abord décroissante, puis croissante ;

- pour la partie réalisée en technique de Fresnel sur la face côté observateur, la fonction représentant les flancs utiles est croissante.

En outre, dans la présente invention, les fonctions donnant les angles d'inclinaison des flancs utiles 41 et 42 en fonction de la distance desdits flancs à l'axe 43 de la lentille de Fresnel sont telles que, en tout point de ladite lentille, la fonction donnant l'angle d'inclinaison du flanc utile 42 côté observateur a une valeur supérieure à celle de la fonction donnant l'angle d'inclinaison du flanc utile 41 côté image source.

Une manière de réduire les rayons parasites passant à travers les flancs de liaison est de faire en sorte que les fonctions donnant les angles d'inclinaison des flancs de liaison en fonction de la distance desdits flancs au centre de la lentille de Fresnel aient les caractéristiques suivantes :

- pour les flancs de liaison de la face côté image source, la fonction devra être décroissante jusqu'à une distance de l'ordre du rayon d'inflexion, puis croissante, avec une discontinuité pour x=rayon de platitude ;

- pour les flancs de liaison de la face côté observateur, la fonction devra être croissante jusqu'à une distance de l'ordre du rayon d'inflexion, puis décroissante jusqu'à une distance de l'ordre de trois fois le rayon d'inflexion, puis croissante.

Dans un premier mode de réalisation préféré de la présente invention, des tests ont montré que l'on a :

$$\frac{E}{(0{,}0164\ k{-}0{,}0298)\ \alpha^2 + (1{,}206{-}0{,}7\ k)\ \alpha + 7{,}334\ k{-}11{,}042} + \frac{r}{0{,}6\ k{-}0{,}555} \approx \frac{D}{0{,}70}$$

où :

E est la distance en mètres entre la lentille et l'image source,
k l'agrandissement effectif du système,
$\alpha$ l'ouverture du système en degrés,
r le rayon d'inflexion en mètres,
D la diagonale de l'image source en mètres.

E varie de 0,3 D à 1,5 D ; k varie de 1,7 à 2,7 ; $\alpha$ varie de 14° à 36°.

Dans un deuxième mode de réalisation préféré de la présente invention, des tests ont montré que, pour une image source de 70 cm de diagonale, avec une lentille constituée d'une matière dont l'indice de réfraction est 1,49, mesurant 80 cm de haut et 1,60 m de large, située à 30 cm de l'image source, et présentant des sillons ayant une largeur de 1 mm et possédant la symétrie de révolution, les angles d'inclinaison des sillons sont selon les formules polynomiales suivantes (on note Rp la valeur de x comprise entre 0,3 et 0,4 et telle que a(Rp)=0 ; on a approximativement : Rp=0,32 ; Rp est le rayon de platitude) :

- face côté image source, flancs utiles :

$$a(x) = -1{,}24219\ x + 6{,}18925\ x^2 - 8{,}90201\ x^3 + 6{,}12359\ x^4 - 1{,}71876\ x^5$$

- face côté image source, flancs de liaison :

  . pour x < Rp :

$$b(x) = 2{,}580 - 2{,}500\ x + 13{,}50\ x^2 - 5{,}000\ x^3$$

  . pour x > Rp :

$$b(x) = 0{,}2426 + 2{,}373\ x - 1{,}716\ x^2 + 0{,}4004\ x^3$$

- face côté observateur, flancs utiles :

$$c(x) = 0{,}845088\ x + 7{,}61459\ x^2 - 13{,}7247\ x^3 + 8{,}620528\ x^4 - 1{,}855738\ x^5$$

- face côté observateur, flancs de liaison :

$$d(x) = 0,9000 + 14,435\, x - 109,74\, x^2 + 280,03\, x^3 - 295,86\, x^4 + 111,93\, x^5$$

où x est la distance du flanc à l'axe, exprimée en mètres, et où a(x), b(x), c(x) et d(x) sont en radians.

L'homme de l'art pourra adapter ces formules pour des matières dont l'indice de réfraction est différent de 1,49.

Sur chaque face de la lentille 40, les flancs utiles et les flancs de liaison alternent. Au centre de la lentille 40, on commence par un flanc utile 46 côté image source, et un flanc utile 47 côté observateur.

Par les flancs de liaison passe de la lumière parasite. On peut, pour réduire les effets de cette lumière, calculer les flancs de liaison au mieux. On peut également opacifier des flancs de liaison, comme indiqué en figure 5. On y distingue une lentille de Fresnel 50 avec des flancs utiles 51 et 52, et avec des flancs de liaison 53 et 54. On peut opacifier les flancs de liaison sur les deux faces ou sur une seule face, ou sur certaines régions d'au moins une des deux faces. L'opacification des flancs de la figure 5 pourra se faire par dépôt, par sérigraphie, projection ou par procédé cathodique.

La figure 6 montre une disposition différente des flancs. On y distingue une lentille de Fresnel 60, des flancs utiles 61 et 64, des flancs de liaison 62 et 63. Ici, il y a deux flancs de liaison, et non plus un seul, entre deux flancs utiles successifs. Le flanc 62 a un angle d'inclinaison variable. Le flanc 63 a un angle d'inclinaison nul. Ceci permet d'opacifier aisément les flancs tels que le flanc 63, à l'aide d'un simple marquage sérigraphique, par exemple.

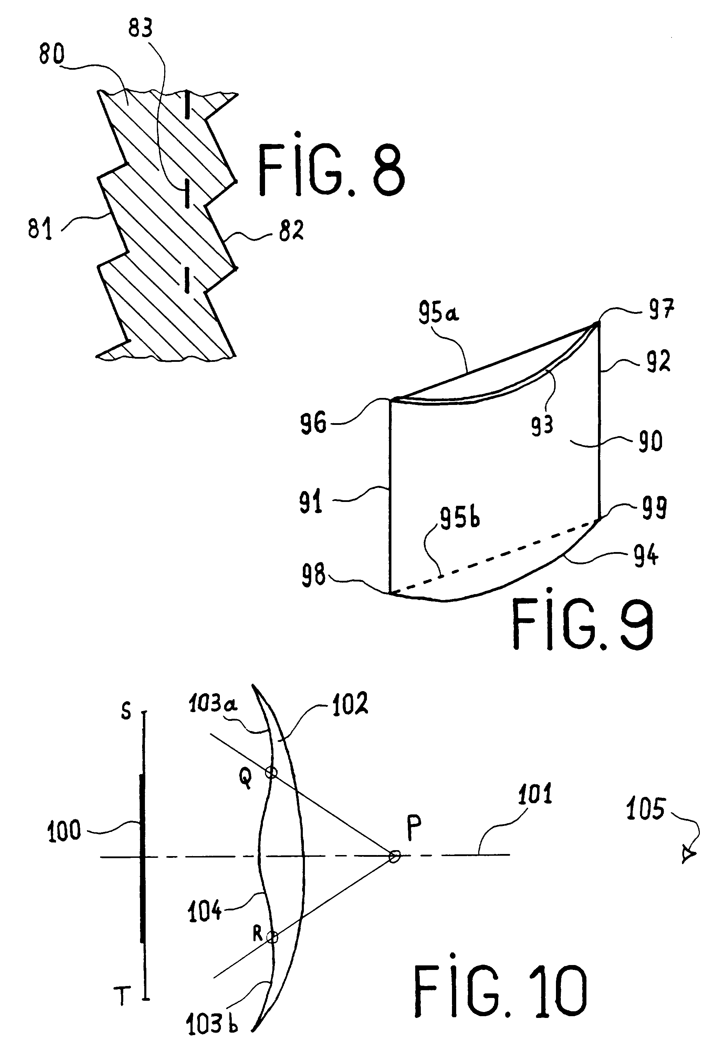

Une autre façon de réduire les effets des rayons lumineux parasites est de disposer, entre les faces de la lentille de Fresnel, un masque opaque à certains endroits seulement. Ainsi, la figure 8 montre une lentille de Fresnel 80, avec des flancs utiles 81 et 82, et un masque 83. Si la lentille de Fresnel a la symétrie de révolution, le masque pourra également avoir cette même symétrie, et être composé d'un ensemble de couronnes opaques, situées dans un plan perpendiculaire à l'axe de la lentille 80.

On peut également chercher à modifier la façon dont deux flancs utiles dévient la lumière. Deux flancs utiles tels que les flancs 41 et 42 de la figure 4 se comportent comme un prisme. On peut ajouter à cet effet de déviation de la lumière un effet de réflexion en utilisant le phénomène de la réflexion totale. Un premier moyen pour y parvenir est d'utiliser les flancs de liaison, en leur donnant un angle d'inclinaison tel qu'il y ait réflexion totale de la lumière ayant pénétré dans la matière via un flanc utile. Un autre moyen d'y parvenir est représenté en figure 7. On y distingue une lentille de Fresnel 70, des flancs utiles 71 et 74, des flancs de liaison 72 et 73. Ici, comme en figure 6, il y a deux flancs de liaison, et non plus un seul, entre deux flancs utiles successifs. Les flanc 72 a un angle d'inclinaison variable. Le flanc 73 a un angle d'inclinaison tel que la lumière pénétrant dans ladite lentille via le flanc utile 74 subisse sur le flanc 73 une réflexion totale. On aura donc ici une réfraction sur le flanc 74, suivie d'une réflexion à l'intérieur de la lentille, sur le flanc 73. Sur la face côté observateur, on peut, de la même façon, disposer des flancs de liaison 75 provoquant une réflexion totale à l'intérieur de la lentille, avant passage via le flanc utile de sortie 76. La combinaison des deux réflexions totales successives permet de réaliser une déviation de la lumière, cette déviation venant se combiner avec les déviations provoquées par les flancs utiles d'entrée et de sortie.

On peut également obtenir une réflexion sur un flanc de liaison en déposant sur ledit flanc une couche d'un produit réfléchissant la lumière. On peut, en outre, associer sur un même flanc, un produit réfléchissant et un produit opacifiant.

En figure 9, on distingue, vue en perspective, une lentille 90 (épaisse ou de Fresnel) de forme globale rectangulaire, avec deux bords verticaux 91 et 92, et deux bords horizontaux 93 et 94. On distingue en outre une barre 95a, joignant les deux coins supérieurs 96 et 97 de la lentille 90. En faisant varier la longueur de la barre 95a, on déforme la lentille 90, modifiant ainsi une courbure de ladite lentille, et modifiant, par suite, l'effet optique produit par ladite lentille. On peut disposer également une autre barre 95b entre les coins inférieurs 98 et 99 de la lentille 90. La modification de l'effet optique peut servir à agrandir l'image préférentiellement dans le sens horizontal, par exemple, ou à corriger certaines déformations de l'image virtuelle produite par la lentille. On pourra utiliser, à la place des barres de la figure 9, des résistances chauffantes et des alliages à mémoire de forme.

En figure 10 sont représentés schématiquement, vus en coupe, une image source 100 et son axe 101, un point P de l'axe 101, et une lentille 102 selon la présente invention, placée entre l'image source 100 et le point P. On distingue également un observateur 105. Le point P est situé entre l'observateur 105 et l'image source. Le plan de coupe est, selon la présente invention (voir la description de la figure 1), parallèle à l'axe de l'image source et tel que, du côté de l'image source 100, la face de la lentille 102 a avec le plan de coupe une intersection qui est une courbe dont une région centrale 104 est convexe et dont une région périphérique 103a et 103b est concave. On distingue également en figure 10 un segment de droite ST, situé dans le plan de coupe de la figure 10 ; ledit segment de droite est perpendiculaire à l'axe 101 de l'image source 100 ; ledit segment de droite a pour centre le centre de l'image source 100, et pour longueur la diagonale de l'image source 100. En figure 10 sont également représentés les points Q et R qui constituent la frontière entre la région centrale 104 et la région périphérique 103. L'angle sous lequel P voit ladite région centrale est l'angle (PQ, PR). On appellera β la moitié de cet angle. L'angle sous lequel P voit le segment ST est l'angle (PS, PT). On appellera Γ la moitié de cet angle. Dans le cas d'une lentille épaisse telle que la lentille 102, on appellera "rayon d'inflexion" la moitié de la longueur QR. Soit z la distance de P à ladite image source. On définit la position du point P par :

$$z = \left[ (0,0164\ k-0,0298)\ \alpha^2 + (1,206-0,7\ k)\ \alpha + 7,334\ k-11,042 \right] \frac{D}{0,70}$$

avec les notations et conventions définies plus haut à propos du premier mode de réalisation préféré de la présente invention. Dans ces conditions, des tests ont montré que la tangente de l'angle β est de l'ordre de :

$$\text{tg } \beta \approx \frac{0,6\ k - 0,555}{z}\ \frac{D}{0,70} \tag{1}$$

On remarque que ladite tangente ne dépend pas de la distance entre l'image source et la lentille, pour un k et un α donnés. La tangente de l'angle Γ vaut :

$$\text{tg } \Gamma = \frac{D}{2\ z} \tag{2}$$

c'est-à-dire que l'on a :

$$\text{tg } \beta \approx \frac{0,6\ k-0,555}{0,35}\ \text{tg } \Gamma \tag{3}$$

Par exemple, si k=2 et si α=26°, la distance z de P à ladite image source est égale à 0,93 fois la diagonale de ladite image source, et β est de l'ordre de 44,7°, d'après la formule (1) ci-dessus sa tangente est de 0,991. Par ailleurs, Γ vaut 28,3° ; sa tangente est de 0,538. On a en outre : (0,6 k-0,555)/0,35 = 1,84.
On vérifie que : 0,991/0,538 ≈ 1,84.

Dans une variante d'une lentille selon la présente invention, on pourra utiliser une matière transparente traitée de manière à ce que le facteur de transmission de la lumière par ladite lentille diminue en présence d'un rayonnement d'une intensité sensiblement supérieure à l'intensité maximale du rayonnement de l'image source. Ceci permet d'atténuer d'éventuels éblouissements ou contrastes trop violents dans le cas où une lumière importante atteint la lentille. On pourra prévoir des moyens tels que ceux utilisés dans les lunettes solaires à opacité variable, ou utiliser des systèmes à cristaux liquides.

Enfin, dans une variante d'une lentille selon la présente invention, on pourra fabriquer ladite lentille dans une matière suffisamment souple pour permettre de donner à ladite lentille, au moins localement, une courbure. Cette souplesse permettra d'enrouler la lentille autour d'un axe, afin de diminuer son encombrement lorsqu'elle n'est pas utilisée.

Bien évidemment, l'homme de métier pourra apporter de nombreuses modifications à la présente invention, sans sortir du cadre des revendications.

## Revendications

1. Dispositif optique pour l'agrandissement d'images, comprenant un système optique disposé entre d'une part une image source (10; 20; 100) composée d'une pluralité de points et définissant un axe d'observation (11;21;101), et d'autre part un point d'observation (13;24;105), le dit système optique comprenant au moins une lentille épaisse (12;22;23;102), dans lequel, d'une part, il existe un premier plan parallèle à l'axe d'observation de l'image source et coupant le dit système de manière telle que l'intersection du dit plan et du dit système comprenne au moins une première courbe convexe dans sa partie centrale (14;104) et concave dans sa partie périphérique (15;103a;103b), et, d'autre part dans lequel il existe un deuxième plan parallèle à l'axe d'observation de l'image source et coupant le dit système de manière telle que l'intersection du dit plan et du dit système comprenne au moins une deuxième courbe (16) qui soit entièrement convexe et qui soit strictement convexe sur au moins une partie de la dite courbe, **caractérisé en ce que**, dans le dit premier plan, l'angle β, égal à la moitié de l'angle sous lequel est vue la dite partie centrale (QR) à partir d'un point (P) situé sur l'axe d'observation (101) de l'image source (100) entre l'image source et le point d'observation (105) et à une distance z de la dite image source est lié à l'angle Γ, égal à la moitié de l'angle sous lequel est vu, à partir du dit point (P), un segment de droite (ST) perpendiculaire à l'axe d'observation de la dite image source ayant son centre confondu avec le centre de l'image source et ayant sa longueur égale à la diagonale de l'image source, la relation entre β et Γ étant la suivante :

$$\text{tg } \beta = \frac{(0,6\ k - 0,555)}{0,35}\ \text{tg } \Gamma$$

z étant défini par :

$$z = \left[ (0,0164\ k - 0,0298)\ \alpha^2 + (1,206 - 0,7\ k)\ \alpha + 7,334\ k - 11,042 \right] \frac{D}{0,70}$$

avec

k = agrandissement effectif du système,
α = ouverture du système en degrés,
D = diagonale de l'image source en mètres.

**2.** Dispositif selon la revendication 1 caractérisé en ce que la distance entre un point (M) situé sur la dite première courbe (14, 15) et un point correspondant (N) situé sur la dite deuxième courbe (16) à une même distance (u) de l'axe d'observation de l'image source, est une fonction décroissante de la distance (u) des dits points au dit axe.

**3.** Dispositif selon la revendication 1 ou 2 caractérisé en ce que l'une au moins de ses surfaces optiques comprenant une partie (32;40;50;60;70;80) réalisée selon une technique à échelons dite de Fresnel, les fonctions représentant les angles d'inclinaison des flancs utiles (41, 42) en fonction de la distance des dits flancs à l'axe (43) de la lentille de Fresnel ont les caractéristiques suivantes :

- pour la partie réalisée selon la technique de Fresnel sur la face côté image source, la fonction représentant les flancs utiles est d'abord décroissante, puis croissante ;
- pour la partie réalisée selon la technique de Fresnel sur la face côté point d'observation, la fonction représentant les flancs utiles est croissante.

**4.** Dispositif selon la revendication 3 caractérisé en ce que les fonctions donnant les angles d'inclinaison des flancs utiles (41, 42) en fonction de la distance des dits flancs à l'axe (43) de la lentille de Fresnel sont telles que, en tout point de la dite lentille, la fonction donnant l'angle d'inclinaison du flanc utile (42) côté point d'observation a une valeur supérieure à celle de la fonction donnant l'angle d'inclinaison du flanc utile (41) côté image source.

**5.** Dispositif selon la revendication 3 caractérisé en ce que les fonctions donnant les angles d'inclinaison des flancs de liaison (44, 45) en fonction de la distance des dits flancs à l'axe (43) de la lentille de Fresnel ont les caractéristiques suivantes :

- pour les flancs de liaison (44) de la face côté image source, la fonction est décroissante jusqu'à une distance de l'ordre du rayon d'inflexion, puis croissante, avec une discontinuité pour x = rayon de platitude ;
- pour les flancs de liaison (45) de la face côté point d'observation, la fonction est croissante jusqu'à une distance de l'ordre du rayon d'inflexion, puis décroissante jusqu'à une distance de l'ordre de trois fois le rayon d'inflexion, puis croissante.

**6.** Dispositif selon l'une quelconque des revendications 3 à 5 caractérisé en ce qu'il comprend un masque (83) disposé entre une surface de Fresnel (81) située côté image source et une surface de Fresnel (82) située côté point d'observation.

**Patentansprüche**

**1.** Optische Vorrichtung zur Bildvergrößerung mit einem optischen System, das zwischen einerseits einem Quellenbild (10, 20, 100), das aus einer Vielzahl von Punkten zusammengesetzt ist und eine Beobachtungsachse (11; 21; 101) definiert, und andererseits einem Beobachtungspunkt (13; 24; 105) angeordnet ist, wobei das optische System mindestens eine dicke Linse (12; 22; 23; 102) umfaßt, die einerseits eine erste Ebene aufweist, die parallel zur Beobachtungsachse des Quellenbildes ist und das System derart schneidet, daß der Schnitt der Ebene und des Systems mindestens eine in ihrem inneren Teil (14; 104) konvexe und in ihrem äußeren Teil (15; 103a, 103b) konkave Krümmung aufweist, und die andererseits eine zweite Ebene aufweist, die parallel zur Beobachtungsachse des Quellenbildes ist und das System derart schneidet, daß der Schnitt der Ebene und des Systems mindestens eine zweite Krümmung (16) aufweist, die vollständig konvex und auf zumindest einem Teil der Krümmung streng konvex ist,
dadurch gekennzeichnet, daß in der ersten Ebene der Winkel β, der gleich dem halben Winkel ist, unter dem der innere Teil (QR) von einem Punkt (P) aus gesehen wird, der auf der Beobachtungsachse (101) des Quellenbildes (100) zwischen dem Quellenbild und dem Beobachtungspunkt (105) und in einem Abstand z von dem Quellenbild liegt, mit dem Winkel Γ verknüpft ist, der gleich dem halben Winkel ist, unter dem von dem Punkt (P) aus ein Geradensegment (ST) gesehen wird, das senkrecht zur Beobachtungsachse des Quellenbildes steht und dessen Zentrum mit dem Zentrum des Quellenbildes zusammenfällt und dessen Länge gleich der Diagonalen des Quellenbildes ist, wobei zwischen β und Γ folgende Beziehung besteht:

$$\text{tg}\beta = \frac{(0.6k\text{-}0,555)\,\text{tg}\Gamma}{0,35}$$

wobei z definiert ist durch:

$$z = \left[ (0,0164k\text{-}0,0298)\,\alpha^2 + (1,206\text{-}0,7k)\,\alpha + 7,334k\text{-}11,042 \right] \frac{D}{0,70}$$

mit

k = effektive Vergrößerung des Systems,
$\alpha$ = Öffnung des Systems in Grad,
D = Diagonale des Quellenbildes in Metern.

2. Vorrichtung nach Anspruch 1, dadurch gekennzeichnet, daß der Abstand zwischen einem auf der ersten Krümmung (14, 15) gelegenen Punkt (M) und einem auf der zweiten Krümmung (16) in einem gleichen Abstand (u) von der Beobachtungsachse des Quellenbildes gelegenen entsprechenden Punkt (N) eine fallende Funktion von dem Abstand (u) der Punkte auf der Achse ist.

3. Vorrichtung nach Anspruch 1 oder 2, dadurch gekennzeichnet, daß bei mindestens einer der optischen Oberflächen, die einen Teil (32; 40; 50; 60; 70; 80) umfassen, der in einer Stufen- oder sogenannten Fresneltechnik ausgeführt ist, die Funktionen, die die Neigungswinkel der nutzbaren Flanken (41, 42) in Abhängigkeit von dem Abstand der Flanken zur Achse (43) der Fresnellinse darstellen, folgende Eigenschaften aufweisen:

- für den nach der Fresneltechnik hergestellten Teil auf der quellenbildseitigen Fläche ist die die nutzbaren Flanken darstellende Funktion zunächst fallend, dann steigend;
- für den nach der Fresneltechnik hergestellten Teil auf der beobachtungspunktseitigen Fläche ist die die nutzbaren Flanken darstellende Funktion steigend.

4. Vorrichtung nach Anspruch 3, dadurch gekennzeichnet, daß die die Neigungswinkel der nutzbaren Flanken (41, 42) in Abhängigkeit von dem Abstand der Flanken zur Achse (43) zu der Fresnellinse angebenden Funktionen derart beschaffen sind, daß die den Neigungswinkel der beobachtungspunktseitigen nutzbaren Flanke (42) angebende Funktion an jedem Punkt der Linse einen Wert aufweist, der größer als derjenige der Funktion ist, die den Neigungswinkel der quellenbildseitigen nutzbaren Flanke (41) angibt.

5. Vorrichtung nach Anspruch 3, dadurch gekennzeichnet, daß die die Neigungswinkel der Verbindungsflanken (44, 45) in Abhängigkeit von dem Abstand der Flanken zur Achse (43) der Fresnellinse angebenden Funktionen folgende Eigenschaften aufweisen:

- für die Verbindungsflanken (44) der quellenbildseitigen Fläche ist die Funktion bis zu einem Abstand in der Größenordnung des Umkehrabstands fallend, dann steigend, mit einer Unstetigkeit für x = Stufenabstand;
- für die Verbindungsflanken (45) der beobachtungspunktseitigen Fläche ist die Funktion bis zu einem Abstand in der Größenordnung des Umkehrabstands steigend, dann bis zu einem Abstand in der Größenordnung des dreifachen Umkehrabstands fallend, dann steigend.

6. Vorrichtung nach einem der Ansprüche 3 bis 5, dadurch gekennzeichnet, daß sie eine Maske (83) umfaßt, die zwischen einer quellenbildseitig gelegenen Fresnelfläche (81) und einer beobachtungspunktseitig gelegenen Fresnelfläche (82) angeordnet ist.

## Claims

1. An optical device for image enlargement, comprising an optical system arranged between on the one hand a source image (10; 20 ; 100) composed of a multiplicity of points and defining an observation axis (11 ; 21 ; 101), and on the other hand an observation point (13 ; 24 ; 105), said optical device comprising at least one thick lens (12 ; 22 ; 23 ; 102), wherein on the first hand there is a first plane parallel to the observation axis of the source image, said first plane cutting said system in such a manner that the intersection of said plane and said system forms at least one first curve being convex in its central part (14 ; 104) and concave in its peripheral part (15 ; 103a ; 103b), and wherein on the other hand there is a second plane parallel to the observation axis of the source image and cutting said system in such a manner that the intersection of said second plane and said system comprises at least one second curve (16) which is entirely convex and which is strictly convex over at least a portion of said curve, characterized in that, in said first plane, the angle $\beta$, equal to half an angle from which said central part (QR) is viewed from a point (P) located on the observation axis (101) of the source image (100) between the source image and the observation point (105) and at a distance z from said source image, is related to an angle $\Gamma$, equal to half an angle from which a straight line segment (ST) is viewed from said point (P), said straight line segment being perpendicular to said observation axis of the source image, said straight line segment having a center being same that the center of the source image and having a length equal to the diagonal of the source image, the relation between β and Γ being the following :

$$\text{tg } \beta = \frac{0.6 \, k - 0.555}{0.35} \text{ tg } \Gamma$$

z being defined by :

$$z = [(0.0164k - 0.0298)\alpha^2 + (1.206 - 0.7k)\alpha + 7.334k - 11.042] \, D/0.7$$

where :

    k is the effective enlargement of the system
    $\alpha$ is the aperture of the system in degrees,
    D is the diagonal of the source image in meters.

**2.** Device according to claim 1, characterized in that the distance between a point (M) located on said first curve (14 ; 15) and a corresponding point (N) located on said second curve (16) at a same distance (u) from the observation axis of the source image, is a decreasing function of the distance (u) from said points to said observation axis.

**3.** Device according to claim 1 or 2, characterized in that at least one of its optical surfaces comprising a part (32 ; 40 ; 50; 60 ; 70 ; 80) manufactured using Fresnel echelons, the functions giving the inclination angles of the useful flanks (41 ; 42) versus the distance from said flanks to the axis (43) of the Fresnel lens have the following characteristics :

- for the part having Fresnel echelons on the source-image oriented side, the function representing the useful flanks is first decreasing, then increasing ;
- for the part having Fresnel echelons on the observation-point oriented side, the function representing the useful flanks is increasing.

**4.** Device according to claim 3, characterized in that the functions giving inclination angles of the useful flanks (41 ; 42) versus the distance from said flanks to the axis (43) of the Fresnel lens are such that, at every point of said lens, the function giving the inclination angle of the useful flank (42) on the observation-point side has a value greater than the value of the function giving the inclination angle of the useful flank (41) on the source-image side.

**5.** Device according to claim 3, characterized in that the functions giving inclination angles of the connecting flanks (44; 45) versus the distance from said flanks to the axis (43) of the Fresnel lens have the following characteristics :

- for the connecting flanks (44) of the source-image oriented side, the function is decreasing up to a distance of approximately an inflexion radius, then increasing, with a discontinuity at x = flatness radius ;
- for the connecting flanks (45) of the observation-point oriented side, the function is increasing up to a distance of approximately an inflexion radius, then decreasing up to a distance of approximately three times said inflexion radius, then increasing.

**6.** Device according to any one of claims 3 to 5, characterized in that it comprises a mask (83) located between a Fresnel surface (81) on the source-image side and a Fresnel surface (22) on the observation-point side.

FIG. 1

FIG. 2

FIG. 3

FIG. 4

FIG. 5

FIG. 6

FIG. 7

FIG. 8

FIG. 9

FIG. 10